Europäisches Patentamt

European Patent Office

Office européen des brevets

(19)

(11) Veröffentlichungsnummer: **0 482 414 A1**

(12) **EUROPÄISCHE PATENTANMELDUNG**

(21) Anmeldenummer: **91117080.1**

(22) Anmeldetag: **08.10.91**

(51) Int. Cl.5: **H02B 1/28**

(30) Priorität: **23.10.90 DE 4033598**

(43) Veröffentlichungstag der Anmeldung:
**29.04.92 Patentblatt 92/18**

(84) Benannte Vertragsstaaten:
**DE FR GB**

(71) Anmelder: **Walter Becker GmbH**
**Barbarastrasse 12**
**W-6605 Friedrichsthal (Saar)(DE)**

(72) Erfinder: **Lorenz, Horst**
**Auf dem Brink 25**
**W-4700 Hamm(DE)**
Erfinder: **Michaely, Walter**
**Im Kaumet 19**
**W-6610 Lebach(DE)**

(74) Vertreter: **Bernhardt, Winfrid, Dr.-Ing.**
**Kobenhüttenweg 43**
**W-6600 Saarbrücken(DE)**

(54) **Zündschutz-Gehäuse zur Aufnahme elektrischer Einrichtungen unter Tage.**

(57) Ein Überdruckgehäuse (1) zur Aufnahme elektrischer Einrichtungen unter Tage unter Fremd-Belüftung
ist in verschiedene, dicht voneinander getrennte, einzeln zugängliche Zellen (23) unterteilt,
die durch eine gemeinsame Belüftungseinrichtung (9,24 bis 45) versorgt sind, wobei sie unabhängig voneinander spülbar (31,38) sind,
und in die aus einem gemeinsamen,an alle Zellen (23) angrenzenden, gleichfalls begasten Raum (22)
die elektrischen Anschlußleitungen (48) dicht eingeführt sind, die außerhalb der Zellen (23) für die einzelnen Zellen (23) gesondert gesteuert (49) sind.

Das Gehäuse (1) ist aus normierten Bausteinen (2;3;37;4;5) zusammengesetzt. Dabei sind die Zellen (23) jeweils durch einen Baustein (3;4;37) gebildet, ein anderer Baustein (2) enthält die Versorgungseinrichtungen (9) für die Belüftung und ein weiterer Baustein (5) die elektrischen Steuerungen.

FIG. 2

Rank Xerox (UK) Business Services
(-/2.17/2.0)

Die Erfindung betrifft ein Zündschutz-Gehäuse, insbesondere Überdruckgehäuse, zur Aufnahme elektrischer Einrichtungen unter Tage unter Fremd-Begasung.

Ein solches Gehäuse ist durch Benutzung bekannt. Es ist mit Fremdbelüftung unter Überdruck gehalten. Für Arbeiten in dem Gehäuse usw. muß es außer Betrieb gesetzt werden.

Der Erfindung liegt die Aufgabe zugrunde, ein Gehäuse zur Verfügung zu stellen, das demgegenüber im Falle von Arbeiten an den elektrischen Einrichtungen und ggf. von Undichtigkeiten möglichst weitgehend funktionsfähig bleibt.

Das erfindungsgemäße Gehäuse erfüllt diesen Zweck damit, daß es in verschiedene, dicht voneinander getrennte, einzeln zugängliche Zellen unterteilt ist,
die durch eine gemeinsame Begasungseinrichtung versorgt sind, wobei sie unabhängig voneinander spülbar sind,
und in die aus einem gemeinsamen, an alle Zelle angrenzenden, gleichfalls begasten Raum die elektrischen Anschlußleitungen eingeführt sind, die außerhalb der Zellen für die einzelnen Zellen gesondert gesteuert sind.

Muß hier an einer elektrischen Einrichtung gearbeitet werden oder tritt etwa eine Undichtigkeit auf und muß sie repariert werden, so fällt nur die jeweils betroffene Zelle aus. In den anderen Zellen können die elektrischen Einrichtungen weiterarbeiten.

Die Unterteilung ist dabei auf den reinen Nutzraum beschränkt. Im übrigen ist das Gehäuse einheitlich, die allgemeinen Einrichtungen sind nur einmal vorhanden und für alle Zellen gemeinsam.

Nach einer vorteilhaften Weiterbildung der Erfindung sind - entsprechend der Unterteilung in die Zellen und ferner entsprechend den allgemeinen Funktionen - normierte Bausteine vorgesehen, die jeweils eine Zelle bilden bzw. eine Funktionseinheit enthalten und aus denen das Gehäuse jeweils nach Bedarf zusammengesetzt wird.

Vorteilhafte Ausgestaltungen weiter im einzelnen sind in den Unteransprüchen sowie in der nachfolgenden Beschreibung eines Ausführungsbeispiels der Erfindung angegeben.

Die Zeichnung gibt das Ausführungsbeispiel wieder.

Fig. 1 zeigt ein Gehäuse in einer vereinfachten, auseinandergezogenen, perspektivischen Darstellung,

Fig. 2 zeigt das Gehäuse in größerem Maßstab mit einer Abwandlung in senkrechtem Längsschnitt, teilweise abweichend von der tatsächlichen Ausbildung schaubildlich schematisiert,

Fig. 3 zeigt in noch einmal etwas größerem Maßstab einen Querschnitt nach Linie III-III in Fig. 2,

Fig. 4 zeigt einen Ausschnitt aus Fig. 2 in weiter vergrößertem Maßstab,

Fig. 5 zeigt eine Abwandlung der in Fig. 4 gezeigten Einzelheit und

Fig. 6 zeigt einen weiteren Gehäuse-Baustein in perspektivischer Darstellung, teilweise aufgebrochen.

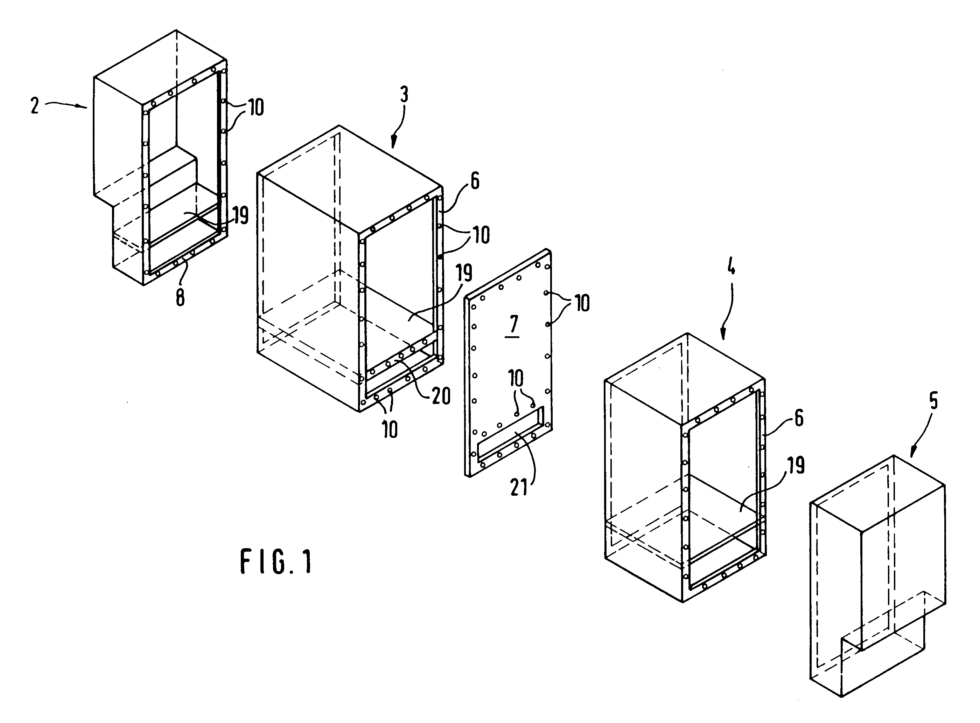

Fig. 1 läßt vier Bausteine des Gehäuses 1 in Form von Kästen 2,3,4 und 5 von gleichem, rechteckigem Querschnitt erkennen.

Die beiden mittleren, unterschiedlich langen Kästen 3 und 4 sind an gegenüberliegenden Seiten offen und mit einem Flansch 6 zur Verbindung miteinander sowie mit den Kästen 2 bzw. 5 versehen jeweils unter Zwischenlegung einer nur einmal gezeichneten Zwischenwand 7. Ferner weisen sie eine nicht gezeichnete Tür auf.

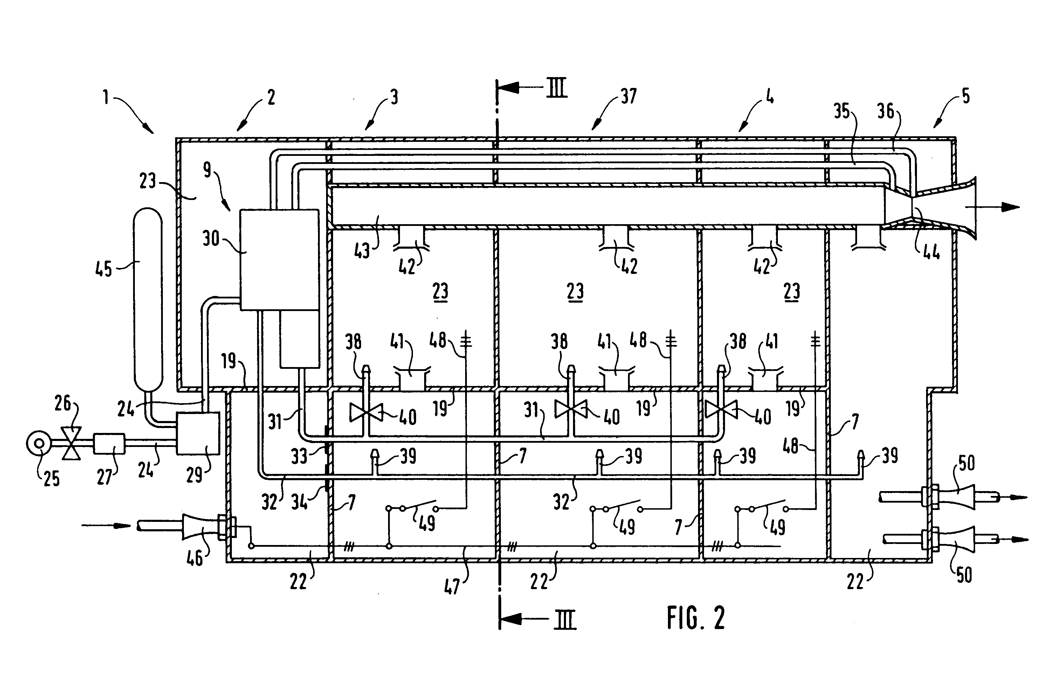

Die beiden äußeren Kästen 2 und 5 sind an einer Seite offen und an der gegenüberliegenden Seite geschlossen. An der offenen Seite weisen sie einen Flansch 8 zur Verbindung mit dem Kasten 3 bzw. 4 an deren Flanschen 6 auf. Der Kasten 2 enthält Versorgungseinrichtungen 9 für die Begasung (Fig. 2), der Kasten 5 enthält nicht gezeichnete elektrische Steuerungen.

Die Kästen 2 und 5 könnten jedoch ebenso wie die Kästen 3 und 4 zweiseitig offen und auch an der zweiten offenen Seite mit einem Flansch versehen sein, um auch in der Mitte angeordnet werden zu können. Die an den Enden angeordneten Kästen, gleich welcher Funktion, werden dann an ihren Flanschen durch eine Abschlußwand geschlossen. Es wäre auch denkbar, die genannten Versorgungseinrichtungen und elektrischen Steuerungen in nur einem Baustein unterzubringen. Die dargestellte Lösung wird jedoch bevorzugt.

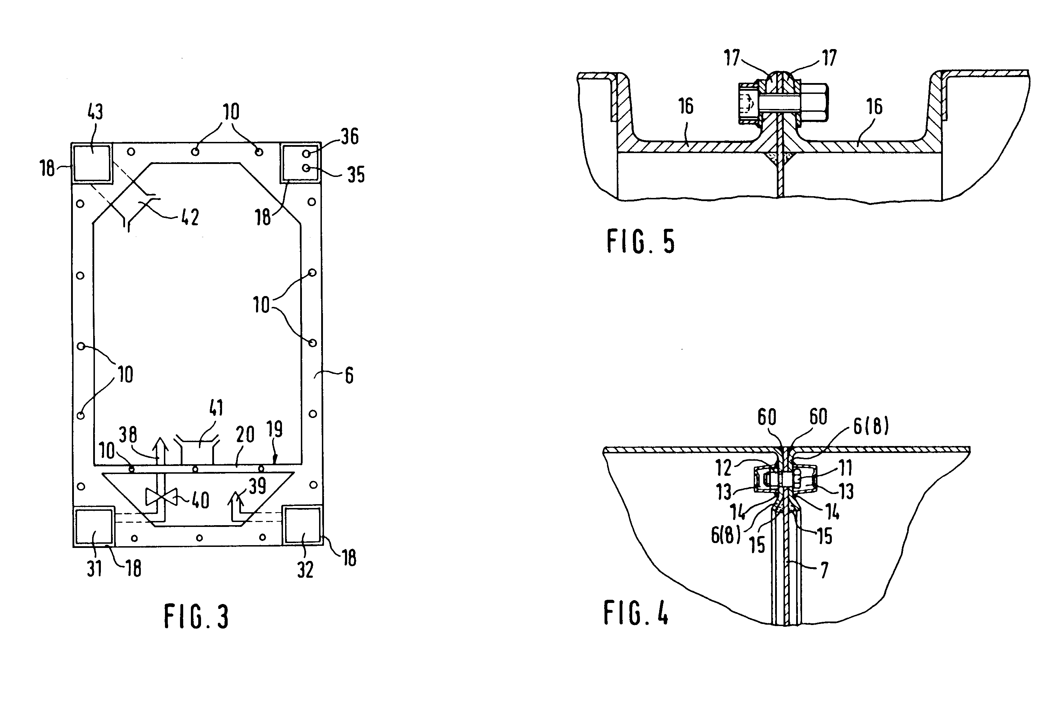

Die Flansche 6 und 8 sind durch Umkanten der Kastenwände gebildete Innenflansche, wie in Fig. 4 gezeigt. Sie sind jeweils auf einer dazwischengesetzten Zwischenwand 7 durch Bohrungen 10 hindurch miteinander verschraubt. Auf die Schraubenköpfe 11 und die Muttern 12 ist jeweils eine Haube 13 gesetzt und gegenüber dem Flansch bei 14 abgedichtet. Die Flansche 6 und 8 sind an ihren Innenrändern abgebogen, so daß eine V-Nut entstanden ist, die ringsum mit Dichtmasse 15 gefüllt werden konnte. Außen ist die Gehäusewandung durch eine Verspachtelung 60 geglättet.

Nach Fig. 5 sind durch an den Rändern der Kästen 2 bis 5 angeordnete U-Profile 16 Außenflansche 17 gebildet.

Wie aus Fig. 3 ersichtlich, sind an den Kanten der Kästen 3 und 4, ferner des Kastens 5, Hohlprofile 18 angeordnet. Die Hohlprofile 18 enden offen bündig mit der Flanschoberfläche. Sie sind hier unter Zwischenlegung einer Dichtung jeweils weiterverbunden mit den Hohlprofilen des nächsten Kastens bzw. an dem Kasten 2 jeweils mit einem passenden Anschluß, der dort bündig mit der Oberfläche des Flansches ausmündet.

Die Anschlüsse an dem Kasten 2 können ebenfalls die Enden von Hohlprofilen sein, wie es die Hohlprofile 18 sind; die Hohlprofile können nur kurz sein oder sich an der gesamten Länge der Kante hinziehen.

Letzteres ist jedenfalls insofern von Vorteil, als die Hohlprofile zugleich als kraftaufnehmende Konstruktionsteile eingesetzt werden können und sollen.

In den Kästen 2, 3 und 4 ist ein Zwischenboden 19 angeordnet, der mit den genannten Flanschen 6 und 8 bündige Flansche 20 aufweist. Dazu ist in den Zwischenwänden 7 unterhalb der Flansche 20 eine Ausnehmung 21 angeordnet, so daß einerseits die Zwischenwände 7 zwischen den Flanschen 6 bzw. 6 und 8 eine gleichmäßige Lage bilden und andererseits unterhalb der Zwischenböden 19 ein auf der gesamten Gehäuselänge durchgehender Raum 22 entsteht. Er ist z.B. durch Klappen in den Zwischenböden zugänglich. Der Kasten 5 hat keinen Zwischenboden, er ist mit dem Raum 22 zu einer räumlichen Einheit verbunden.

Die Kästen 3 und 4 bilden dagegen über dem Zwischenboden, der wiederum ringsherum abgedichtet ist, geschlossene Zellen 23.

Wie schon erwähnt, enthält der Kasten 2 die Versorgungseinrichtungen für die Begasung, im vorliegenden Falle Belüftung.

Sie bestehen im wesentlichen aus einem außerhalb des Kastens liegenden Anschluß 24 zur Verbindung mit einer allgemeinen Druckluftleitung 25, in dem ein Ventil 26, eine einen Druckminderer und ein Filter aufweisende Einheit 27 und eine Notversorgungssteuerung 29 angeordnet sind, und einer innerhalb des Kastens 2 angeordneten Steuerung 30, von der eine Spülleitung 31 und eine Überdruck- und Spülleitung 32 zu einem Anschluß 33 bzw. 34 und in die zwei Meßleitungen 35 und 36 führen.

Die Anschlüsse 33 und 34 sind die beiden unteren der bereits erwähnten Anschlüsse, mit denen die unteren Hohlprofile 18 des Kastens 3 und über diese der folgenden Kästen verbunden sind. Die Spülleitung 31 und die Überdruck- und Spülleitung 32 ziehen sich somit in den betreffenden Hohlprofilen 18 über die Anschlüsse 33 bzw. 34 hinaus durch das gesamte Gehäuse 1.

Das Gehäuse 1 ist in Fig. 2 gegenüber Fig. 1 erweitert um einen zwischen den Kästen 3 und 4 angeordneten Kasten 37 von noch etwas größerer Länge als der Kasten 3.

In jedem Kasten 3,37 und 4 hat die Spülleitung 31 einen Auslaß 38 und die Überdruck- und Spülleitung 32 einen Auslaß 39.

Der Auslaß 38 ist aus dem Hohlprofil 18 durch den Raum 22, wo er mit einem elektrisch gesteuerten Ventil 40 versehen ist, hindurchgeführt in die Zelle 23. Der Auslaß 39 mündet aus dem Hohlprofil 18 ohne eigene Steuerung in den Raum 22. Jeweils ein Ventil 41 in dem Zwischenboden 19 erlaubt, das Gehäuse im ganzen mittels der Überdruck- und Spülleitung 32 zu spülen und sonst unter überall gleichen Druck zu setzen.

Das Spülen wird im übrigen ermöglicht durch jeweils ein zweites Ventil in den Kästen 3,37,4 und 5, das den Zugang zu einer Spülluftableitung 43 öffnet. Die Spülluftableitung 43 ist wiederum in Hohlprofilen 18 eingerichtet. Anders als die übrigen Leitungen in den Hohlprofilen 18 ist sie durch die Endwand des Kastens 5 hindurchgeführt, um hier offen auszumünden.

Vor der Ausmündung ist in dem betreffenden Hohlprofil 18 des Kastens 5 eine Strömungsmeßeinrichtung 44 angeordnet. Zu dieser gehören die beiden schon erwähnten Meßleitungen 35 und 36, die durch die vierten Hohlprofile 18 hindurch bis in den Kasten 2 gelegt sind.

Auch die Zelle 23 des Kastens 2 ist durch, jedoch nicht gezeichnete, Ventile mit dem Raum 22, der Spülleitung 31 und der Spülluftableitung 43 verbunden.

Eine an der Außenseite des Kastens 2 angebrachte Druckflasche 45 wird durch die Notversorgungssteuerung 29 bei Ausfall der allgemeinen Druckluftleitung 25 statt dieser angeschlossen, um einen Überdruck in dem Gehäuse 1 aufrechtzuerhalten z.B. von 50 Pascal.

Ferner ist der Kasten 2 mit einer dichten Kabeleinführung 46 mit Zugentlastung versehen. Sie liegt ebenso wie der Anschluß 24 geschützt in einer Nische des Kastens 2. Die Kabeleinführung 46 geht in den Raum 22 und speist hier eine Stromschiene 47. Von dieser aus sind die Zellen der Kästen 2,37 und 4 durch abgedichtet in sie eingeführte Leitungen 48 versorgt. Schütze 49, um die Leitungen 48 zu beaufschlagen und abzuschalten, sind noch in dem Raum 22 angeordnet. In gleicher Weise wie die Zellen 38 der Kästen 3,37 und 4 sind auch die Zelle 23 des Kastens 2 sowie der Kasten 5 an die Stromschiene 47 angeschlossen, der Kasten 5 lediglich ohne Hindurchführung durch einen, in ihm nicht vorhandenen, Zwischenboden.

Die Schütze 49 sind durch die bereits erwähnte, in dem Kasten 5 enthaltene elektrische Steuerung gesteuert. Diese übt auch alle anderen elektrischen Steuerfunktionen aus, die für die weiter unten beschriebenen Vorgänge erforderlich sind.

Die zugehörigen Verkabelungen wie auch diejenigen der in den Zellen 23 untergebrachten elektrischen Geräte - Transformatoren, Umrichter, Frequenzwandler, Verteilerkästen, Anschlußkästen, elektronische Steuerungen, mechanische Schalter - sind nicht eingezeichnet. Es sind lediglich die Nutzausgänge 50 dargestellt, die gleichfalls an dem Kasten 5 angeordnet sind, wiederum dicht und mit Zugentlastung. Die Verkabelungen sind durch den Raum 22 und dicht durch die Zwischenböden 19 hindurch gelegt.

Schließlich kann der Kasten 5 eine Schalttafel aufweisen, über die Steuerbefehle von außen eingegeben werden können.

Bei Neuinbetriebnahme des gesamten Gehäuses 1 wird zunächst mit geöffneten Ventilen 41 und 42 mittels der Überdruck- und Spülleitung 32 gespült. Die Spülung wird überwacht und geregelt durch die Strömungsmeßeinrichtung 44. Im Normalzustand sind dann die Ventile 42 wie übrigens auch die Ventile 40 geschlossen und die Überdruck- und Spülleitung 32 dient nur noch dazu, einen Überdruck, beispielsweise von 150 Pascal, aufrechtzuerhalten, und zwar bei geöffneten Ventilen 41 in dem gesamten Gehäuse 1.

Tritt in einer Zelle 23 ein Leck auf, wird dies durch einen in der Zelle angeordneten Fühler wahrgenommen. Das Ventil 41 dieser Zelle wird geschlossen. Das Schütz 49 der in die Zelle führenden Leitung 48 öffnet. Der Ausfall wird durch ein Signal angezeigt.

Ebenso wird die Leitung 48, falls es vorher versäumt worden ist, abgeschaltet, wenn die in die Zelle führende Tür geöffnet wird, um eine Arbeit durchzuführen. Das gesamte übrige Gehäuse bleibt weiter funktionsfähig.

Um die eine Zelle wieder in Betrieb zu nehmen, wird sie bei geschlossenem Ventil 41 und geöffneten Ventilen 40 und 42 allein mittels der Spülleitung 31 gespült, wiederum mit Überwachung und Regelung durch die Strömungsmeßeinrichtung 44. Nach Beendigung wird der Normalzustand wiederhergestellt.

Die gesonderten Leitungen 31 und 32 erlauben es auf eine einfache, sichere Weise, eine Zelle 23 zu spülen und gleichzeitig im übrigen Gehäuse den normalen Überdruck aufrechtzuerhalten.

Das beschriebene Beispiel mit der an sich üblichen Fremdbelüftung durch die von über Tage herangeführte Druckluft wird der Regelfall sein. Es ist jedoch auch beispielsweise an Begasung mit Stickstoff zu denken.

Die Kästen 2 oder 5 könnten auch eine Versorgungseinrichtung, d.h. insbesondere eine Steuereinrichtung, für Kühlwasser oder Kühlluft enthalten. Für das Kühlwasser oder die Kühlluft könnte beispielsweise eine Leitung in den Hohlprofilen eingerichtet werden, in denen die Meßleitungen 35 und 36 verlegt sind, die man nötigenfalls auch an der Außenwand des Gehäuses entlangführen könnte. Es könnten dann nach Bedarf Kühlschlangen o.

dgl. in den Zellen angeschlossen werden, auch etwa nur zur Kühlung einzelner wärmeerzeugender Geräte.

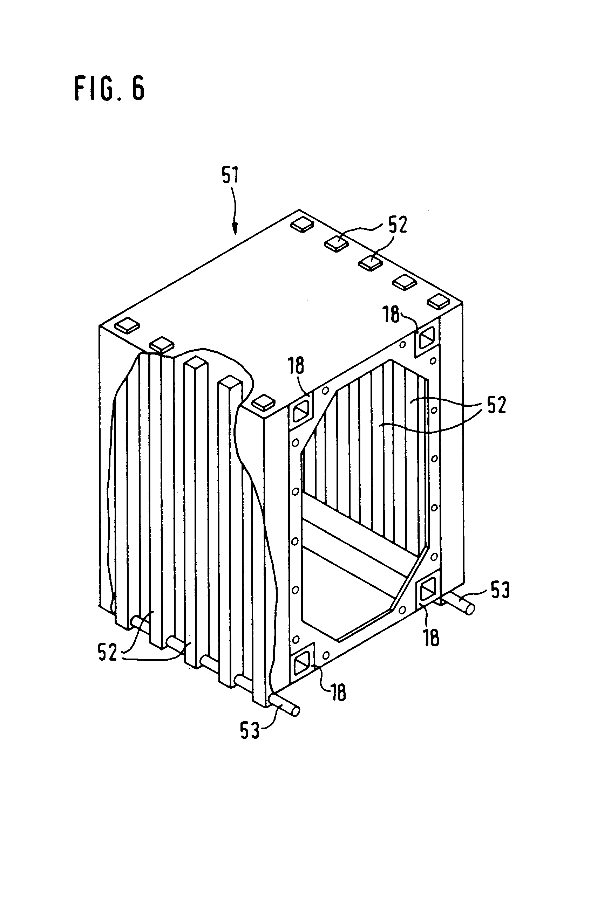

Eine besonders günstige Ausführungsform zeigt jedoch Fig. 6 mit einem den Kästen 3,4 und 37 entsprechenden Kasten 51, in dem an den Innenseiten der Kastenwände wärmeabführende Kamine 52 angeordnet sind, die den Boden und die Decke des Kastens 51 durchsetzen. Die Kamine 52 können durch freien Luftzug kühlen.

Soweit nötig, kann erstens eine Unterstützung des Luftzuges und zweitens eine unmittelbare Kühlung hinzukommen durch an den unteren Enden der Kamine nach oben gerichtete Luftdüsen in Form von Bohrungen in einem die Kamine 52 unter dem Kasten 51 quer durchsetzenden Rohr 53, das an die oben erwähnte Versorgungseinrichtung für Kühlluft angeschlossen ist.

Die Bauheiten in Form der Kästen 2,3,4,5,37 und 51 sind auch ohne die Zwischenwände 7 verwendbar, um je nach Bedarf ein Einraum-Gehäuse zusammenzusetzen, dies beispielsweise nur aus den Kästen 2,3 und 5 oder 2 und 5, wobei Platzreserven in diesen zum Nutzraum gemacht werden.

**Patentansprüche**

1. Zündschutz-Gehäuse, insbesondere Überdruckgehäuse (1), zur Aufnahme elektrischer Einrichtungen unter Tage unter Fremd-Begasung,
   dadurch gekennzeichnet,
   daß es in verschiedene, dicht voneinander getrennte, einzeln zugängliche Zellen (23) unterteilt ist,
   die durch eine gemeinsame Begasungseinrichtung (9,24 bis 45) versorgt sind, wobei sie unabhängig voneinander spülbar (31,38) sind,
   und in die aus einem gemeinsamen, an alle Zellen (23) angrenzenden, gleichfalls begasten Raum (22) die elektrischen Anschlußleitungen (48) dicht eingeführt sind, die außerhalb der Zellen (23) für die einzelnen Zellen (23) gesondert gesteuert (49) sind.

2. Gehäuse nach Anspruch 1,
   dadurch gekennzeichnet,
   daß die Zellen (23) in einer geraden Reihe angeordnet sind und der genannte Raum (22) sich, vorzugsweise unterhalb, entlang der Reihe erstreckt.

3. Gehäuse nach Anspruch 1 oder 2,
   dadurch gekennzeichnet,
   daß die Zellen (23), vorzugsweise aus dem genannten Raum (22) heraus über in den Zellenwänden (19) angeordnete Ventile (41), unter Überdruck setzbar sind.

4. Gehäuse nach einem der Ansprüche 1 bis 3, dadurch gekennzeichnet, daß es aus normierten Bausteinen (3;4;37), vorzugsweise verschiedener Größe, zusammengesetzt ist, wobei die Zellen (23) jeweils durch einen Baustein (3;4;37) gebildet sind und ein anderer Baustein (2) die Versorgungseinrichtungen (9) für die Begasung enthält.

5. Gehäuse nach Anspruch 4, dadurch gekennzeichnet, daß ein weiterer Baustein (5) die elektrischen Steuerungen zu den verschiedenen Zellen (23) enthält.

6. Gehäuse nach den Ansprüchen 2 oder 3 und 4 oder 5, dadurch gekennzeichnet, daß die die Zellen (23) bildenden Bausteine (3;4;37) an gegenüberliegenden Seiten offene und an diesen Seiten mit einem Flansch (6) zur Verbindung miteinander bzw. mit dem genannten anderen (2) bzw. dem genannten weiteren (5) Baustein unter Zwischenlegung einer Zwischenwand (7) bzw. zum Schließen durch eine Abschlußwand versehene Kästen (3;4;37) rechteckigen Querschnitts sind, die eine Tür aufweisen.

7. Gehäuse nach Anspruch 6, dadurch gekennzeichnet, daß der genannte andere die Versorgungseinrichtungen (9) für die Begasung enthaltende Baustein (2) und/oder der genannte weitere, die elektrischen Steuerungen enthaltende Baustein (5) ein an einer Seite offener und an der gegenüberliegenden Seite offener oder, vorzugsweise, geschlossener Kasten (2;5) rechteckigen Querschnitts ist, der an der offenen Seite bzw. den offenen Seiten einen Flansch (8) zur Verbindung mit einem die Zellen (23) bildenden Baustein (3 bzw. 4) unter Zwischenlegung einer Zwischenwand (7) bzw. Schließen durch eine Abschlußwand aufweist.

8. Gehäuse nach den Ansprüchen 6 und 7, dadurch gekennzeichnet, daß an Kanten der erstgenannten Kästen (3;4;37) Hohlprofile (18) angeordnet sind, die offen im wesentlichen bündig mit der Flanschoberfläche enden zur Weiterverbindung unter Zwischenlegung einer Dichtung bzw. zur Schließung (3;4;37) und die in den Kästen Ein- (42) oder Auslässe (38) für Gas und/oder elektrische Leitungen aufweisen, und daß an dem anderen (2) bzw. dem weiteren (5) Kasten an der offenen Seite bzw. den offenen Seiten im wesentlichen bündig mit der Flanschoberfläche zu den genannten offenen Enden passende Anschlüsse (33;34) ausmünden.

9. Gehäuse nach Anspruch 8, dadurch gekennzeichnet, daß die Hohlprofile (18), vorzugsweise an allen vier Kanten der Kästen (3;4;37), zugleich als kraftaufnehmende Konstruktionsteile eingesetzt sind.

10. Gehäuse nach einem der Ansprüche 6 bis 9, dadurch gekennzeichnet, daß in den Kästen (2;3;4;37) ein Zwischenboden (19) angeordnet ist, mit dem in ihnen der genannte gemeinsame Raum (22) für die Anschlußleitungen (47,48) abgeteilt wird.

11. Gehäuse nach Anspruch 10, dadurch gekennzeichnet, daß die Zwischenböden (19) mit den genannten Flanschen (6;8) bündige Flansche (20) aufweisen und in den genannten Zwischenwänden (7) unterhalb der Flansche (20) eine Ausnehmung (21) angeordnet ist.

12. Gehäuse nach Anspruch 10 oder 11, dadurch gekennzeichnet, daß der genannte weitere, die elektrischen Steuerungen enthaltende Kasten (5) mit dem genannten gemeinsamen Raum (22) zu einer räumlichen Einheit verbunden ist.

13. Gehäuse nach einem der Ansprüche 6 bis 12, dadurch gekennzeichnet, daß an den Innenseiten der Kastenwände wärmeabführende Kamine (52) angeordnet sind, die den Boden und die Decke des Kastens (51) durchsetzen.

14. Gehäuse nach Anspruch 13, dadurch gekennzeichnet, daß an den unteren Enden der Kamine (52) nach oben gerichtete Luftdüsen angeordnet sind, vorzugsweise in Form von Bohrungen in einem die Kamine (52) unter dem Kasten (51) quer durchsetzenden Rohr (53).

FIG. 1

FIG. 2

FIG. 5

FIG. 4

FIG. 3

## FIG. 6

**Europäisches Patentamt**

**EUROPÄISCHER RECHERCHENBERICHT**

Nummer der Anmeldung

**EP 91 11 7080**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | US-A-2 501 345  (J.B. MacNEILL et al.)<br>* Das ganze Dokument *<br>– – – | 1-6 | H 02 B 1/28 |
| Y | DE-U-8 508 807  (L. HANSEN)<br>* Ansprüche 1-12; Seite 8, Zeilen 7-22; Seite 8, Zeile 31 - Seite 9, Zeile 17; Abbildungen 1-7 *<br>– – – | 1-6 | |
| A | DE-A-3 235 331  (H. IBING et al.)<br>* Ansprüche 1-5; Abbildungen 1-4 *<br>– – – | | |
| A | FR-A-2 571 777  (RUHRKOHLE AG)<br>* Zusammenfassung; Ansprüche 1-10; Abbildungen 2,5 *<br>– – – – – | | |

**RECHERCHIERTE SACHGEBIETE (Int. Cl.5)**

H 02 B

Der vorliegende Recherchenbericht wurde für alle Patentansprüche erstellt

| Recherchenort | Abschlußdatum der Recherche | Prüfer |
|---|---|---|
| Den Haag | 28 Januar 92 | LUND M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument
-------------------------------------------------------------------------
& : Mitglied der gleichen Patentfamilie, übereinstimmendes Dokument